# EUROPÄISCHE PATENTANMELDUNG

(11) **EP 1 361 323 A2**
(43) Veröffentlichungstag der Anmeldung: **12.11.2003**
(21) Anmeldenummer: 03010063.0
(22) Anmeldetag: 03.05.2003
(51) Int. Cl.: E05B 9/00, E05B 65/12, E05B 53/00, F16C 1/10

(54) **Kraftfahrzeug-Türschloss oder -Klappenschloss**

(30) Priorität: 08.05.2002 DE 10220732
(71) Anmelder: Brose Schliesssysteme GmbH & Co. KG, 42369 Wuppertal (DE)
(72) Erfinder: Arlt, Horst, 42489 Wülfrath (DE); Weyerstall, Bernd, 42369 Wuppertal (DE); Josten, Stefan, 42897 Remscheid (DE)
(74) Vertreter: Gesthuysen, von Rohr & Eggert

(57) **Zusammenfassung**

Die Erfindung betrifft ein Kraftfahrzeug-Türschloß oder -Klappenschloß mit einem Gehäuse mit einem Einlaufschlitz für einen Schließkloben, mit im Gehäuse angeordneten Schließelementen wie Drehfalle und Sperrklinke, mit mindestens einem an einer Schmalseite des Gehäuses austretenden Bowdenzug (3) zur mechanischen Betätigung der Schließelemente und ggf. mit einem im Gehäuse angeordneten elektrischen Antrieb für die Schließelemente, insbesondere die Sperrklinke, wobei das Gehäuse im wesentlichen symmetrisch zu seiner Mittelebene ausgebildet ist und wobei der Einlaufschlitz an beiden zur Mittelebene parallelen Flachseiten offen ist und so den wahlweisen Einbau des Kraftfahrzeugschlosses für Linkseinlauf, Rechtseinlauf oder Mitteleinlauf des Schließklobens erlaubt. Die Erfindung ist dadurch gekennzeichnet, daß der Bowdenzug (3) am Gehäuse in einer Drehfassung (8) drehbar angebracht ist und daß der Bowdenzug (3) mittels einer bogenförmig ausgebildeten Führung (9) von der Drehfassung (8) ausgehend in einem Bogen vom Gehäuse weggeführt ist.

## Beschreibung

Die Erfindung betrifft ein Kraftfahrzeug-Türschloß oder -Klappenschloß mit den Merkmalen des Oberbegriffs von Anspruch 1. Im folgenden wird nur der Begriff Kraftfahrzeugschloß verwendet, der Türschlösser und Klappenschlösser implizieren soll.

Das bekannte Kraftfahrzeugschloß, von dem die Erfindung ausgeht (WO 97/13942 A2), zeichnet sich dadurch aus, daß aufgrund der Symmetrie des Außengehäuses dieses Kraftfahrzeugschloß wahlweise für Linkseinlauf oder für Rechtseinlauf oder für Mitteleinlauf des Schließklobens bei einer Heckklappe oder einer Hecktür eingesetzt werden kann. Damit werden auch kleine Serien wirtschaftlich produzierbar, da die Gesamtstückzahl des Kraftfahrzeugschlosses des benötigten Typs sich verdoppelt bzw. vervielfacht.

Bei dem bekannten Kraftfahrzeugschloß ist die grundlegende Konzeption weiter dadurch optimiert, daß das Gehäuse weitgehend gekapselt ist. Eine weitgehend komplette Abdichtung des Innenraums des Gehäuses gegen Feuchtigkeitseintritt ist gegeben.

Für besondere Ausgestaltungen und Weiterbildungen des bekannten Kraftfahrzeugschlosses darf auf die zuvor genannte WO 97/13942 A2 verwiesen werden, deren Offenbarungsgehalt auch zum Offenbarungsgehalt der vorliegenden Anmeldungsunterlagen gemacht wird.

Das bekannte Kraftfahrzeugschloß ist an sich ein Elektroschloß, weist nämlich im Gehäuse einen elektrischen Antrieb für die Sperrklinke auf, der die Sperrklinke aushebt, wenn ein entsprechender Steuerbefehl eintrifft. Allerdings ist bei diesem Kraftfahrzeugschloß eine mechanische Redundanz dadurch realisiert, daß eine zusätzliche mechanische Betätigungsmöglichkeit mittels eines Bowdenzugs beispielsweise von einem entsprechenden Schließzylinder her gegeben ist. Der Bowdenzug tritt über einen abgedichteten Einführstutzen an einer Schmalseite des Gehäuses in dieses ein. Konkret ist beim bekannten Kraftfahrzeugschloß ein weiterer Bowdenzug vorgesehen, der eine Bowdenzug dient der Außenöffnung im Notfall, der andere der Innenbetätigung im Notfall.

Die Anordnung des Einführstutzens für den Bowdenzug an der Schmalseite des Gehäuses des Kraftfahrzeugschlosses gibt bei dem zuvor erläuterten Stand der Technik die Möglichkeit, den Bowdenzug in die eine oder die andere Richtung vom Gehäuse des Kraftfahrzeugschlosses wegzuführen. Dadurch kann der Bowdenzug bei den unterschiedlichen Einbaumöglichkeiten des Kraftfahrzeugschlosses bereits recht zweckmäßig in die jeweils gewünschte Richtung verlegt werden.

Der Lehre liegt das Problem zugrunde, das bekannte Kraftfahrzeugschloß mit im wesentlichen symmetrischem Gehäuse und an einer Schmalseite austretendem Bowdenzug hinsichtlich der Einbauvarianten weiter zu verbessern.

Die zuvor aufgezeigte Problemstellung löst das beanspruchte Kraftfahrzeugschloß mit den Merkmalen des kennzeichnenden Teils von Anspruch 1. Vorgesehen ist eine Drehfassung des Bowdenzugs, genauer gesagt des Mantels des Bowdenzugs, an dem Gehäuse in Verbindung mit einer bogenförmig ausgebildeten Führung für den Bowdenzug, die diesen von der Drehfassung ausgehend in einem relativ engen Bogen vom Gehäuse wegführt. Die Anbindung des Bowdenzugs an das Gehäuse des Kraftfahrzeugschlosses ist also so ausgeführt, daß sich der Bowdenzug nachträglich mittels seiner Führung gegenüber dem Gehäuse drehen läßt. Der Bowdenzug kann somit zum Gehäuse in durch die Führung vorbestimmter Weise ausgerichtet werden.

Hinzu kommt, daß Drehfassung und Führung eine vorzügliche Möglichkeit bieten, den Bowdenzug abgedichtet in das Gehäuse einzuführen bzw. den Mantel des Bowdenzugs zum Gehäuse hin abzudichten und die Seele in das Innere des Gehäuses eintreten zu lassen.

Bevorzugte Ausgestaltungen und Weiterbildungen der zuvor geschilderten Lehre sind Gegenstand der Unteransprüche.

Im folgenden wird die Erfindung anhand einer lediglich ein Ausführungsbeispiel darstellenden Zeichnung näher erläutert. In der Zeichnung zeigt
- Fig. 1: schematisch ein erfindungsgemäßen Kraftfahrzeugschloß, das wahlweise als Seitentürschloß und als Klappenschloß eingesetzt werden kann, den Bowdenzug mittels der Führung nach rechts gedreht,
- Fig. 2: das Kraftfahrzeugschloß aus Fig. 1, den Bowdenzug jetzt mittels der Führung nach links gedreht,
- Fig. 3: die Führung des Kraftfahrzeugschlosses mit einem Teil des Bowdenzugs in vergrößerter Darstellung.

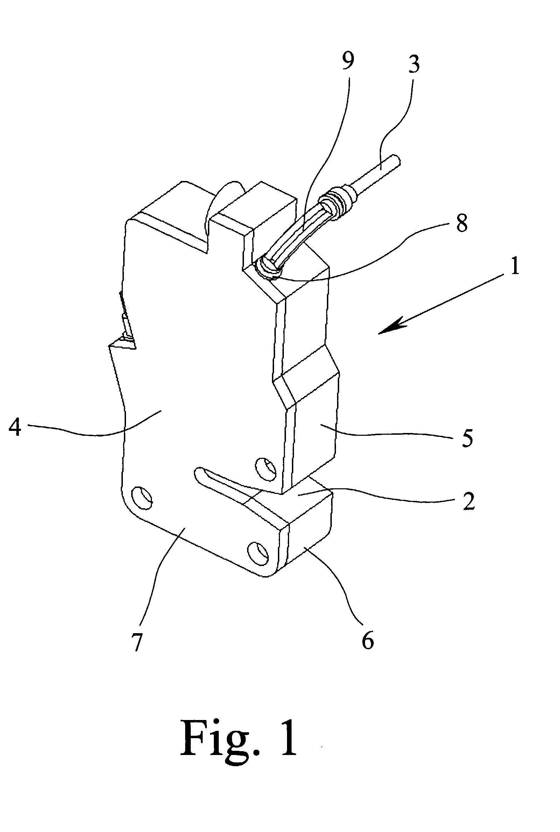

Die Fig. 1 bis 3 zeigen ein Kraftfahrzeug-Türschloß oder -Klappenschloß, im folgenden kurz Kraftfahrzeugschloß genannt. Dieses zeichnet sich durch die im allgemeinen Teil der Beschreibung erläuterten Vorzüge aus, ist nämlich universell für Rechtseinlauf, für Linkseinlauf oder für Mitteleinlauf (beispielsweise bei einer Hecktür) einsetzbar.

Dieses Kraftfahrzeugschloß zeigt ein Gehäuse 1 mit einem Einlaufschlitz 2 für einen hier nicht dargestellten, nämlich am Gegenstück der Karosserie anzuordnenden Schließkloben (Schließbolzen, Schließkeil). Im einzelnen darf für den Aufbau eines solchen Kraftfahrzeugschlosses auf den eingangs erläuterten Stand der Technik gemäß WO 97/13942 A2 verwiesen werden.

Im Gehäuse 1 eines solchen Kraftfahrzeugschlosses befinden sich notwendigerweise Schließelemente wie Drehfalle und Sperrklinke oder, in einer anderen Ausführungsform, einer Rastklinke. Da in der Zeichnung das Gehäuse 1 geschlossen dargestellt ist, kann man die Schließelemente im Inneren des Gehäuses 1 nicht sehen, auch insoweit darf auf den Stand der Technik verwiesen werden.

An einer Schmalseite des Gehäuses 1 tritt ein Bowdenzug 3 aus. Der Bowdenzug 3 dient zur mechanischen Betätigung der Schließelemente, insbesondere der Öffnungsbetätigung der Sperrklinke. Betätigung kann auch Bewegung eines Hebelelementes und lediglich indirekte Betätigung der Sperrklinke oder auch eine Bewegung eines Sicherungshebels bedeuten. Es ist nicht notwendig, daß das Kraftfahrzeugschloß ein Elektroschloß ist, daß sich also im Gehäuse 1 weiter ein elektrischer Antrieb für die Schließelemente, insbesondere die Sperrklinke befindet. Es ist aber bevorzugt, daß es sich bei dem Kraftfahrzeugschloß gemäß der Erfindung um ein Elektroschloß mit einem solchen elektrischen Antrieb zum Betätigen der Sperrklinke oder der Rastklinke handelt, bei dem der Bowdenzug 3 der mechanischen Notbetätigung, also der mechanischen Redundanz dient.

Das Gehäuse 1 ist im wesentlichen symmetrisch zu seiner Mittelebene ausgebildet und bildet zwei Flachseiten 4, in denen der Einlaufschlitz 2 erkennbar ist, sowie die bereits erwähnten Schmalseiten 5. Im wesentlichen symmetrisch zu der Mittelebene beschreibt die insgesamt vorliegende Gestaltung des Gehäuses 1, nicht die Aufteilung in einzelne Abschnitte des Gehäuses. Das dargestellte Ausführungsbeispiel zeigt nämlich insoweit ein durchaus nicht symmetrisch zu der Mittelebene gestaltetes Gehäuse 1, denn dieses Gehäuse 1 ist aus einer eine Flachseite 4 und im wesentlichen alle Schmalseiten 5 bildenden Gehäuseschale 6 sowie einem die andere Flachseite 4 des Gehäuses 1 bildenden Gehäusedeckel 7 zusammengesetzt. Diese Zusammensetzung aus verschiedenen Teilen ändert aber nichts daran, daß in der Gesamtausbildung das Gehäuse 1 die zuvor erläuterte im wesentlichen vorliegende Symmetrie zu der Mittelebene hat, die es benötigt, um die universelle Einbaubarkeit an den verschiedenen Punkten in der Kraftfahrzeugkarosserie zu gewährleisten.

Wesentlich ist, daß der Einlaufschlitz 2 an beiden zur Mittelebene parallelen Flachseiten 4 offen ist und so den wahlweisen Einbau des Schlosses für Linkseinlauf, Rechtseinlauf oder Mitteleinlauf des Schließklobens erlaubt.

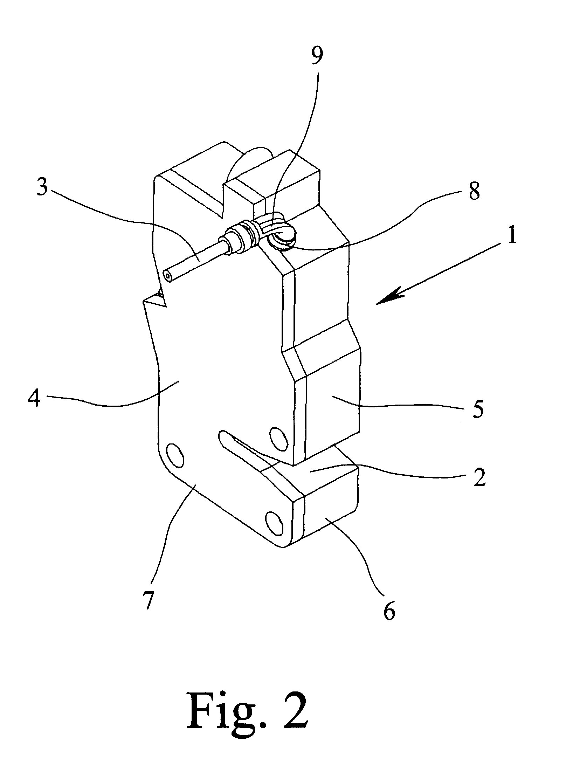

Das dargestellte Ausführungsbeispiel zeigt nun, daß der Bowdenzug 3 am Gehäuse 1 in einer Drehfassung 8 drehbar angebracht ist und daß der Bowdenzug 3 mittels einer bogenförmig ausgebildeten Führung 9 von der Drehfassung 8 ausgehend in einem Bogen vom Gehäuse 1 weggeführt ist. Mittels der Führung 9 kann der Bowdenzug 3 in vorgegebener Weise bogenförmig mit relativ geringem Bogenradius, insbesondere einem Bogenradius von ca. 10 bis 100 mm, vorzugsweise ca. 10 bis 30 mm, von der Drehfassung 8, der Austrittsstelle aus dem Gehäuse 1, weggeführt werden. Fig. 1 zeigt eine Einbauvariante beispielsweise für die Fahrertür, Fig. 2 die Einbauvariante für die Beifahrertür, in der der Bowdenzug 3 genau entgegengesetzt wie bei Fig. 1 vom Gehäuse 1 von der Mittelebene weggeführt wird. Dies wird dadurch ermöglicht, daß der Bowdenzug 3 mittels der an der Drehfassung 8 angeordneten Führung 9 entsprechend gedreht werden kann.

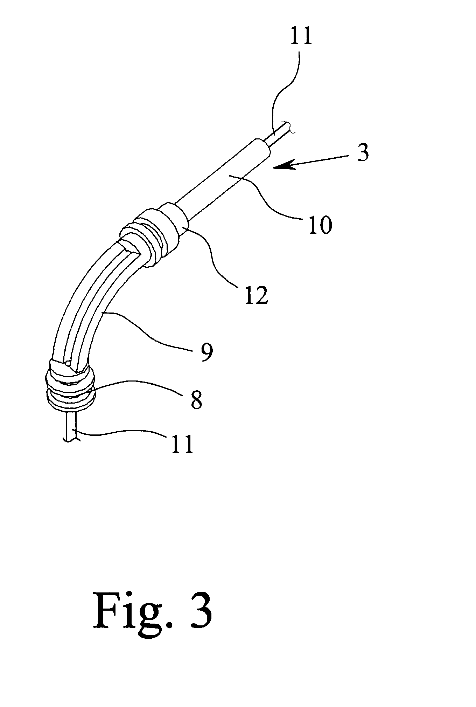

Der Bowdenzug 3 hat systembedingt einen Mantel 10 und eine in dem Mantel 10 laufende Seele 11. Beides ist in Fig. 3 angedeutet. Die Drehbarkeit des Bowdenzugs 3 gegenüber dem Gehäuse 1 macht es empfehlenswert, daß die Seele 11 des Bowdenzugs 3 im Inneren des Gehäuses 1 am dortigen Angriffspunkt, insbesondere an der Sperrklinke, drehbar angekuppelt ist.

Das dargestellte Ausführungsbeispiel zeigt im übrigen, daß der Bowdenzug 3 i. w. parallel zur Mittelebene aus dem Gehäuse 1 austritt und von der Mittelebene weggeführt ist. Dies ist aber nicht zwingend. Bei einer eventuell etwas weniger stark symmetrischen Ausgestaltung des Gehäuses 1 könnte der Bowdenzug auch bereits von vornherein geneigt zur Mittelebene austreten.

Die Symmetrie des Gehäuses 1 hat im übrigen, wie das dargestellte Ausführungsbeispiel zeigt, mit der Anordnung der Drehfassung 8 für den Bowdenzug 3 an der Schmalseite 5 des Gehäuses 1 nichts zu tun. Im Gegenteil, hier ist der Bowdenzug 3 bezogen auf die Mittelebene asymmetrisch angeordnet. Der Bowdenzug 3 muß ja im Inneren des Gehäuses 1 mit seiner Seele 11 an der richtigen Stelle "ankommen". Das bestimmt den Anschlußpunkt am Gehäuse 1, also die Position der Drehfassung 8.

Das dargestellte Ausführungsbeispiel zeigt eine bevorzugte Ausführungsform insoweit als die Führung 9 mit der Drehfassung 8 fest verbunden, im dargestellten Ausführungsbeispiel nämlich sogar einstückig ausgeführt ist. Das korrespondiert besonders gut damit, daß hier die Führung 9 und die Drehfassung 8 aus Kunststoff bestehen.

Man könnte auch andere Werkstoffe einsetzen, insbesondere könnte sich ein Verbundwerkstoff empfehlen, beispielsweise ein plastisch biegbares, mit Kunststoff ummanteltes Metall.

Es könnte sich empfehlen, die Drehfassung 8 mit einer Drehwinkelbegrenzung zu versehen. Das dargestellte Ausführungsbeispiel zeigt insoweit jedoch eine andere Lösung, es ist nämlich das Gehäuse 1 bezogen auf die Drehfassung 8 mit einer Drehwinkelbegrenzung versehen. Der in den Fig. 1 und 2 erkennbare Vorsprung am Gehäuse 1 verhindert nämlich eine Drehung des Bowdenzugs 3 über die in Fig. 1 und Fig. 2 dargestellten Positionen hinaus. Gerade bei einer solchen Drehwinkelbegrenzung kann man möglicherweise die Seele 11 im Inneren des Gehäuses 1 auch fest ankuppeln, weil die Beweglichkeit der Seele 11 im Mantel 10 des Bowdenzugs 3 für die Verstellung des Bowdenzugs 3 ausreicht.

Das dargestellte und bevorzugte Ausführungsbeispiel macht im übrigen deutlich, daß die Führung 9 hier einen fest vorgegebenen Bogen, und zwar einen Bogen von ca. 90° bildet. Ein fest vorgegebener Bogen ist insbesondere bei einem einstückigen Kunststoff-Bauteil für Führung 9 und Drehfassung 8 zweckmäßig. Bei einer anderen Variante kann man vorsehen, daß die Führung 9 in gewissem Ausmaß in den gewünschten Winkel biegbar, also insoweit plastisch verformbar ist. Dann kann man auch vor Ort beim Einbau noch den Winkel, in dem die Führung 9 den Bowdenzug 3 führt, nachstellen.

Der Bowdenzug 3 könnte als solcher in die vorzugsweise einseitig offene Führung 9 eingelegt und vorzugsweise darin verrastet sein. Das dargestellte Ausführungsbeispiel zeigt jedoch eine andere Gestaltung, die dadurch gekennzeichnet ist, daß die Führung 9 in diesem Abschnitt den Mantel des Bowdenzugs 3 bildet bzw. verlängert und selbst eine Fassung 12 für den Mantel 10 des Bowdenzugs 3 aufweist. Die Fassung 12 für den Mantel 10 an der Führung 9 erkennt man in Fig. 3 besonders deutlich. Diese Fassung 12 sollte bei entsprechender Feuchtigkeitsabdichtung des Kraftfahrzeugschlosses eine Feuchtigkeitsabdichtung aufweisen oder bilden. Das bedeutet, daß hier ein entsprechendes Abdichtungselement, beispielsweise ein O-Ring angeordnet ist oder die Oberflächen der Fassung 12 und des Mantels 10 so gestaltet sind, daß sie im Zusammenwirken miteinander die notwendige Feuchtigkeitsabdichtung bilden. Letzteres kann man mit entsprechender Oberflächengestaltung, insbesondere entsprechender Elastomer-Beschichtung erreichen. Gegebenenfalls kann man auch eine mechanische Verschraubung o. dgl. realisieren.

In gleicher Weise wie für die Fassung 12 bei einer entsprechenden Gestaltung der Führung 9 kann auch die Drehfassung 8 eine Feuchtigkeitsabdichtung aufweisen oder bilden, um einen Eintritt von Feuchtigkeit in das Innere des Gehäuses 1 auch an dieser Stelle zu vermeiden.

## Patentansprüche

1. Kraftfahrzeug-Türschloß oder -Klappenschloß mit einem Gehäuse (1) mit einem Einlaufschlitz (2) für einen Schließkloben, mit im Gehäuse (1) angeordneten Schließelementen wie Drehfalle und Sperrklinke, mit mindestens einem an einer Schmalseite (5) des Gehäuses (1) austretenden Bowdenzug (3) zur mechanischen Betätigung der Schließelemente und ggf. mit einem im Gehäuse (1) angeordneten elektrischen Antrieb für die Schließelemente, insbesondere die Sperrklinke, wobei das Gehäuse (1) im wesentlichen symmetrisch zu seiner Mittelebene ausgebildet ist und wobei der Einlaufschlitz (2) an beiden zur Mittelebene parallelen Flachseiten (4) offen ist und so den wahlweisen Einbau des Kraftfahrzeugschlosses für Linkseinlauf, Rechtseinlauf oder Mitteleinlauf des Schließklobens erlaubt,
**dadurch gekennzeichnet,**
**daß** der Bowdenzug (3) am Gehäuse (1) in einer Drehfassung (8) drehbar angebracht ist und daß der Bowdenzug (3) mittels einer bogenförmig ausgebildeten Führung (9) von der Drehfassung (8) ausgehend in einem Bogen vom Gehäuse (1) weggeführt ist.

2. Kraftfahrzeugschloß nach Anspruch 1, **dadurch gekennzeichnet, daß** die Seele (11) des Bowdenzugs (3) im Inneren des Gehäuses (1) am dortigen Angriffspunkt drehbar angekuppelt ist.

3. Kraftfahrzeugschloß nach Anspruch 1 oder 2, **dadurch gekennzeichnet, daß** der Bowdenzug (3) i. w. parallel zur Mittelebene aus dem Gehäuse (1) austritt und von der Mittelebene weggeführt ist.

4. Kraftfahrzeugschloß nach einem der Ansprüche 1 bis 3, **dadurch gekennzeichnet, daß** die Führung (9) mit der Drehfassung (8) fest verbunden, insbesondere einstückig ausgebildet ist.

5. Kraftfahrzeugschloß nach einem der Ansprüche 1 bis 4, **dadurch gekennzeichnet, daß** die Führung (9) und/oder die Drehfassung (8) aus Kunststoff besteht bzw. bestehen.

6. Kraftfahrzeugschloß nach einem der Ansprüche 1 bis 5, **dadurch gekennzeichnet, daß** die Drehfassung (8) oder das Gehäuse (1) mit einer Drehwinkelbegrenzung für die Drehung des Bowdenzugs (3) gegenüber dem Gehäuse (1) versehen ist.

7. Kraftfahrzeugschloß nach einem der Ansprüche 1 bis 6, **dadurch gekennzeichnet, daß** die Führung (9) einen fest vorgegebenen Bogen von vorzugsweise ca. 90° bildet oder daß die Führung (9) in gewissem Ausmaß in dem gewünschten Winkel biegbar ist.

8. Kraftfahrzeugschloß nach einem der Ansprüche 1 bis 7, **dadurch gekennzeichnet, daß** die Führung (9) ein vorzugsweise einseitig offenes Formteil bildet, in das der Bowdenzug (3) einlegbar, insbesondere einrastbar ist.

9. Kraftfahrzeugschloß nach einem der Ansprüche 1 bis 7, **dadurch gekennzeichnet, daß** die Führung (9) in diesem Abschnitt den Mantel des Bowdenzugs (3) bildet bzw. verlängert und selbst eine Fassung (12) für den Mantel (10) des Bowdenzugs (3) aufweist, wobei, vorzugsweise, die Fassung (12) für den Mantel (10) eine Feuchtigkeitsabdichtung aufweist oder bildet.

10. Kraftfahrzeugschloß nach einem der Ansprüche 1 bis 9, **dadurch gekennzeichnet, daß** die Drehfassung (8) eine Feuchtigkeitsabdichtung aufweist oder bildet.
